(19)

Europäisches
Patentamt
European
Patent Office
Office européen
des brevets

(11)     **EP 3 005 515 B2**

(12)          **NEW EUROPEAN PATENT SPECIFICATION**
                          After opposition procedure

(45) Date of publication and mention
of the opposition decision:
**05.04.2023   Bulletin 2023/14**

(45) Mention of the grant of the patent:
**24.06.2020   Bulletin 2020/26**

(21) Application number: **14868572.0**

(22) Date of filing: **05.12.2014**

(51) International Patent Classification (IPC):
*H02J 3/00* (2006.01)      *H02J 13/00* (2006.01)
*H02J 3/16* (2006.01)      *H02J 3/24* (2006.01)
*H02S 40/30* (2014.01)

(52) Cooperative Patent Classification (CPC):
**H02J 3/48; H02J 3/241; H02J 3/381; H02J 3/466;
H02J 3/50;** H02J 3/1821; H02J 3/1864; H02J 3/32;
H02J 7/35; H02J 2300/26; Y02E 10/30; Y02E 10/56;
Y02E 40/30

(86) International application number:
**PCT/CA2014/051174**

(87) International publication number:
**WO 2015/081444 (11.06.2015 Gazette 2015/23)**

(54) **MULTIVARIABLE MODULATOR CONTROLLER FOR POWER GENERATION FACILITY**

MULTIVARIABLE MODULATORSTEUERUNG FÜR STROMERZEUGUNGSANLAGE

CONTRÔLEUR DE MODULATEUR MULTIVARIABLE POUR INSTALLATION DE GÉNÉRATION
D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **06.12.2013   US 201361912969 P**

(43) Date of publication of application:
**13.04.2016   Bulletin 2016/15**

(60) Divisional application:
**20178545.8 / 3 745 550**

(73) Proprietor: **Varma, Rajiv Kumar
London, Ontario N5X 4M4 (CA)**

(72) Inventor: **Varma, Rajiv Kumar
London, Ontario N5X 4M4 (CA)**

(74) Representative: **RGTH
Patentanwälte PartGmbB
Neuer Wall 10
20354 Hamburg (DE)**

(56) References cited:
**EP-A1- 1 309 063          EP-A2- 2 182 207
WO-A1-2010/119136      WO-A1-2011/032265
WO-A1-2012/150933      WO-A2-2009/102842
WO-A2-2010/086031      US-A1- 2012 205 981
US-A1- 2013 131 884      US-B2- 8 391 032**

- **NAOTO KAKIMOTO ET AL.: 'Power Modulation
of Photovoltaic Generator for Frequency Control
of Power System' IEEE TRANSACTIONS ON
ENERGY CONVERSION vol. 24, no. 4, December
2009, XP011282902**
- **Anonymous: "Technische Richtlinie
Erzeugungsanlagen am Mittelspannungsnetz
Richtlinie fur Anschluss und Paraiielbetrieb von
Erzeugungsanlagen am Mittelspannungsnetz",
BDEW, June 2008 (2008-06), pages 1-138,**
- **Anonymous: "Regelungen und Ubergangsfristen
fur bestimmte Anforderungen in Erganzung zur
technischen Richtlinie: Erzeugungsanlagen am
Mittelspannungsnetz Richtlinie fur Anschluss
und Parallelbetrieb von Erzeugungsanlagen am
Mittelspannungsnetz", BDEW, 1 January 2013
(2013-01-01), pages 1-6,**
- **Anonymous: "Gesetz zur Neuregelung des
Rechtsrahmens ftir die Forderung der
Stromerzeugung aus erneuerbaren Energien",
Bundesgesetzblatt 2011, vol. 42, 28 July 2011
(2011-07-28), pages 1634-1678,**
- **Anonymous: "Gesetz zur Änderung des
Rechtsrahmens für Strom aus solarer
Strahlungs-energie und zu weiteren Änderungen
im Recht der erneuerbaren Energien",
Bundesgesetzblatt 2012, vol. 38, 17 August 2012
(2012-08-17), pages 1754-1764,**

Processed by Luminess, 75001 PARIS (FR)

**(Cont. next page)**

- Anonymous: "Gesetz fur den Vorrang Erneuerbarer Energien (Erneuerbare-Energien-Gesetz - EEG) EEG", Ein Service des Bundesministeriums der justiz in Zusammenarbeit mit der juris GmbH, 25 October 2008 (2008-10-25), pages 1-57,
- Anonymous: "Transmissioncode 2007 Netz- und Systemregeln der deutschen Ubertragungsnetzbetreiber", erband der Netzbetreiber -VDN, pages 1-90,
- Anonymous: "Gesetz fur den Vorrang Erneuerbarer Energien (Erneuerbare-Energien-Gesetz - EEG) EEG", Ein Service des Bundesministeriums der justiz in Zusammenarbeit mit der juris GmbH,

**Description**

**TECHNICAL FIELD**

The present invention relates to power generation facilities. More specifically, the present invention provides methods and systems for operating a power generation facility such as a photovoltaic (PV) solar farm.

**BACKGROUND OF THE INVENTION**

Power systems worldwide need to ensure voltage regulation, stability, allow high levels of power transmission capacity in the lines to transfer power from existing or new generating sources, and regulate system frequency, despite various system disturbances. These disturbances could be slow and gradual variations in loads and generation, or large and sudden variations, such as faults, line switching, equipment outages, etc.

There are primarily two types of stability:

Angle Stability: This relates to maintaining synchronism of generators. It has two main components:

a) Small Signal Stability - caused by small disturbances and insufficient damping in power systems with respect to different oscillatory modes

b) Transient Stability - This is affected by large disturbances in power systems

Voltage Stability: This relates to the system's ability to maintain acceptable voltages, and is typically caused by lack of adequate reactive power support both during steady state and during disturbances such as faults.

Another major problem being increasingly encountered is the lack of power transfer capacity in transmission and distribution lines. Increasing stability significantly increases the power transmission capacity of transmission lines. On the other hand, the power transfer capacity in distribution lines is typically limited by thermal limits of the line.

A third problem being faced by power systems is the regulation of system frequency despite the ongoing system disturbances. Frequency deviations occur due to imbalances between the generation and the loads during disturbances. Maintaining frequency is an important issue in isolated power systems, such as microgrids.

Another issue with current technology is the lack of power carrying capacity in power transmission lines. With the ever-growing number of renewable generating sources in power transmission and distribution grids, there is an imminent need for providing capacity on existing lines to carry the real power generated by them.

The existing technology for compensating for reactive power flows in the lines is through passive devices such as capacitors and inductors, which are fixed in rating, and hence not controllable. Therefore, this method is not widely employed due to these limitations.

The other option is to install very expensive dynamic reactive power compensators such as Static Var Compensator (SVC) or Static Synchronous Compensator (STATCOM). These may not be cost-effective for the objective to be achieved.

Based on the above, there is therefore a need for systems, methods, and devices which mitigate if not overcome the issues noted above. More specifically, since photovoltaic (PV) solar farms conventionally only produce real power, and do not contribute to increasing system stability, enhancing power transfer capacity, or providing frequency control, methods and systems which would allow PV energy farms to perform these functions would be desirable.

WO 2011/032265 A1 discloses a photovoltaic plant with inverters which are also used for stabilizing the grid by producing reactive power either during night, or during times of low active power production.

**SUMMARY OF INVENTION**

The present invention is defined by independent method claim 1. A controller operates on the power generation facility to modulate real power or reactive power, or both real and reactive power in a decoupled (independent) control mode to contribute to the overall stability of the power transmission system. Real or reactive power, or both, can be injected into the power transmission system as necessary. As well, the real power produced or the reactive power produced by the power generation facility can be increased or decreased as required by the power transmission system. For solar farms, the solar panels can be connected or disconnected to add or subtract real power. Also, the real power output from the solar panels can be modulated by varying its output direct current (DC) voltage. The inverter can further be controlled to inject or absorb reactive power with the power transmission system.

**BRIEF DESCRIPTION OF THE DRAWINGS**

The embodiments of the present invention will now be described by reference to the following figures, in which identical reference numerals in different figures indicate identical elements and in which:

**FIGURE 1** is a block diagram of a dual area power system including a PV solar farm equipped with a multivariable modulator controller according to one aspect of the invention;

**FIGURE 2** is a diagram illustrating a typical daily real power output of a PV solar farm;

**FIGURE 3** illustrates typical modulated real power output waveforms for a PV solar farm as implemented by a multivariable modulator controller as illustrated in Figure 1;

**FIGURE 4** is a graph of a power output characteristic of a solar panel;

**FIGURE 5** is a phasor diagram for line power factor correction;

**FIGURE 6** is a diagram illustrating a PV solar farm with a multivariable modulator controller connected to a power transmission system;

**FIGURE 7** is a block diagram of a multivariable modulator controller according to one implementation of one aspect of the invention;

**FIGURE 8** is a block diagram of a dc-link voltage control loop which may be used with the invention; and

**FIGURE 9** is a block diagram of a VAr/ac voltage regulator which may be used with the invention.

**DETAILED DESCRIPTION**

The present invention includes a multivariable modulator that operates to control a power generation facility to assist in maintaining or improving a power transmission system's stability. The multivariable modulator allows the power generation facility to:

i) increase system stability, including transient stability, small signal stability, voltage stability and voltage regulation

ii) regulate system frequency, and

iii) improve power transmission capacity in both transmission and distribution lines.

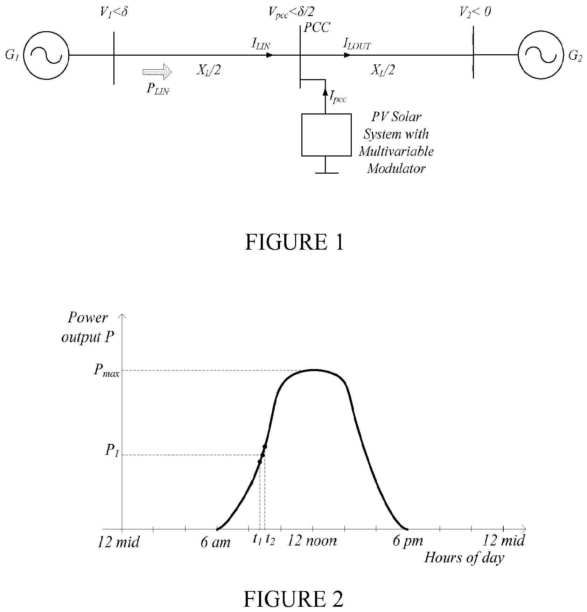

Figure 1 illustrates a two area power system connected through a transmission line. Each area has both generators and loads. Area 1 is represented by an equivalent generator $G_1$ and a terminal voltage of $v_1 < \delta$. Area 2 is modeled by an equivalent generator $G_2$ and a terminal voltage $V_2 < 0$. A PV solar farm with a multivariable modulator is connected at the middle of the line, at the point of common coupling (PCC) where the terminal voltage is $V_{pcc} < (\delta/2)$. The line has a total reactance $X_L$.

In terms of contributing to increase system stability, the multivariable modulator operates by modulating the real and/or reactive power from the power generation facility.

A power system may become unstable due to angle instability on the occurrence of large system disturbances, such as, faults, line or equipment switchings/outages, etc. System instability may result due to the growing oscillations of any or a combination of the following modes given below with their projected oscillation frequencies:

a) Local Generator Rotor Modes, associated with the rotor oscillations of synchronous generators in a plant: *in the range of 1-3 Hz*

b) Inter-area modes associated with the oscillations of a set of generators in an area against another set of generators in a different area: *in the range of 0.1-1 Hz*

c) Controller Modes related to controllers of generating units, and other dynamic equipment such as Static Var Compensators (SVC), Static Synchronous Compensators (STATCOM), High Voltage Direct Current (HVDC) converters: *in the range of 2-15 Hz*

d) Torsional Modes associated with the turbine generator shaft systems of synchronous generators, wind turbine generators owing to their interaction with excitation controls, series compensated lines, and HVDC controls, etc.,: *in the range of 10-50/60 Hz*

The oscillations noted above are reflected in various system quantities, such as generator angular frequency, line power flow, line current, bus frequency, etc. The multivariable modulator controller can derive the oscillatory behavior of the oscillatory modes utilizing signals obtained or derived from the power system, termed as auxiliary signals. These auxiliary signals include locally obtainable quantities such as line current, line power flow, bus frequency, or remotely acquired/communicated quantities such as remote generator speed, remote voltage angles, etc. These signals and quantities can be transmitted to the PV solar farm location through various communication channels, e.g. fibre optic cables, Wide Area Measurement Systems (WAMS), etc.

Once the oscillations are detected, the reactive power and real power of the solar farm are then modulated by the multivariable modulator to counteract the oscillations of these modes. A simple explanation of the control concept is provided below.

From Figure 1 and the description given above, it can be seen that the real power $P_{LIN}$ transmitted from Area 1 to the PCC is given by,

$$P_{LIN} = \frac{V_1 V_{pcc}}{X_L/2} \sin \delta/2$$

（1）

Thus the real power flow $P_{LIN}$ can be controlled by varying $V_{pcc}$.

The typical real power output over a twenty-four hour period from a PV solar farm is depicted in Figure 2. $P_{max}$ denotes the maximum power output from a solar farm which occurs around noon time on a fully sunny day. $P_{max}$ is also the rated inverter capacity $S_{max}$ of the PV solar farm. Let $P_1$ be the power output of the solar farm at time $t_1$, when the solar farm observes power system oscillations (in line power or system frequency) caused by some disturbance in the power system.

The multivariable modulator can then perform any of the following three control functions:

i) Modulation of reactive power output of PV solar system

ii) Modulation of real power output of PV solar system

iii) Modulation of both reactive and real power outputs of PV solar system simultaneously in a decoupled (independent) manner

The above modulations are performed from the time instant $t_1$ to time instant $t_2$ when the power system oscillations decay to within acceptable levels. The time period $t_2 - t_1$ is defined as the *"period of modulation"* and is expected to be small, typically a few minutes. It is therefore assumed that the solar isolation and consequently the solar power availability $P_1$ will remain constant over this time period.

The effects of both reactive power modulation and real power modulation, as well as how to implement such modulation schemes, are described below.

Reactive power modulation is performed relative to what is occurring in the power system generator. Local or remote signals that indicate the status of the generator are thus transmitted to the multivariable modulator. Depending on the status of the generator, the multivariable modulator control can modulate the reactive power generated by the power generation facility to compensate for the electromechanical oscillations of the generator.

If d(Δδ)/dt or Δf is positive (where "f" is the generator frequency), i.e., generator rotor $G_1$ is accelerating due to built up kinetic energy (mechanical power input is more than electrical power output), the multivariable modulator operates to inject reactive power from the PV solar system. This increases the bus voltage $V_{pcc}$, thereby leading to the increase of generator electrical power output per equation (1) above, thus opposing the generator acceleration.

If d(Δδ)/dt or Δf is negative, i.e., generator rotor $G_1$ is decelerating due to loss of kinetic energy (mechanical power input is less than electrical power output), the multivariable modulator operates to absorb reactive power into the PV solar system. This decreases the bus voltage $V_{pcc}$, which leads to the decrease of generator electrical power output per equation (1) above, thus opposing the generator deceleration.

The reactive power output from the PV solar system is thus modulated by the multivariable modulator control in response to generator modal oscillations (or power system oscillations) that are sensed through auxiliary signals. The reactive power modulation control essentially modulates the bus voltage around its reference value.

To implement the reactive power modulation control described above, two schemes are contemplated, especially for PV solar farms. Since the operating requirements are different for night time versus day time for PV solar farms, these schemes take into account the unique requirements of PV solar farms. These schemes essentially control how much of the power generation facility's inverter capacity is to be used for damping the power transmission system's oscillations.

For a night time implementation, the multivariable modulator control provides dynamic modulation of reactive power in the night utilizing the full inverter capacity of the power generation facility to damp the power system oscillations.

For a day time implementation, let the solar farm be producing real power $P_1$ at any time instant during the day. If power system oscillations are observed, which can be detrimental to the power system stability, the multivariable modulator controller can modulate the reactive power in either of the following ways:

i) the entire inverter capacity for the PV power generation facility is used for reactive power modulation. In this case the solar panels are totally disconnected during the period of modulation.

ii) the inverter capacity remaining after real power generation $\sqrt{(S_{max2} - P_1^2)}$ is used for reactive power modulation. In this case the real power output of the PV solar farm is not affected.

iii) the inverter capacity needed is more than the remaining inverter capacity described in ii), but not the entire inverter capacity as described in i). In this case the solar panels are partially disconnected during the period of modulation.

It should be noted that technique i) and iii) above are superior to, and are therefore preferable over, technique ii).

For techniques i) and iii), as soon as the power system oscillations settle down to less than the values specified by utility standards of stability, the multivariable modulator will cause the PV solar system to return to its normal real power production with all solar panels connected and based on solar radiation availability.

The decision to commence reactive power modulation and the period of modulation is determined autonomously by the multivariable modulator itself, based on the magnitude and duration of oscillations of power system quantities.

Alternatively, the decision to commence reactive power modulation and the period of modulation may also be communicated by the system operator to the multivariable modulator, based on the magnitude and duration of oscillations of power system quantities.

As an alternative and/or an addition to the above noted reactive power modulation, real power produced by the power generation facility can also be modulated by the multivariable modulator controller. Again, this modulation is based on signals and quantities sensed and/or remotely received from the oscillating generator.

If $d(\Delta\delta)/dt$ or $\Delta f$ is positive, i.e., the generator rotor is accelerating due to built up kinetic energy, the multivariable modulator controller operates to decrease real power output from the PV solar system to below a predetermined setpoint. This effectively opposes generator acceleration.

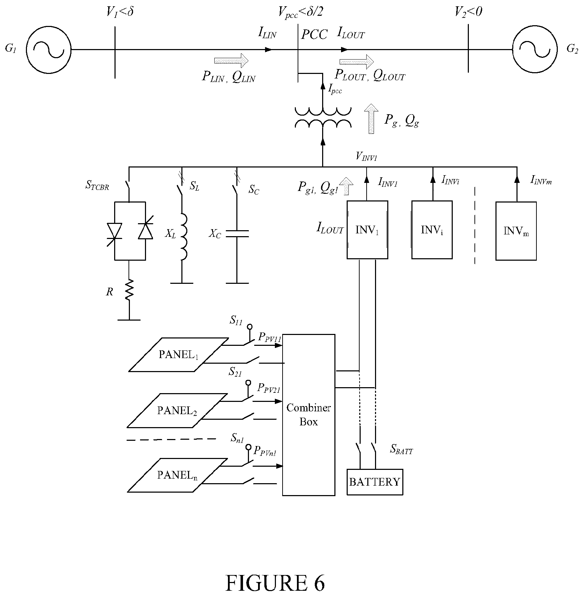

To increase the effectiveness in such a situation, real power can be absorbed by a Thyristor Controlled Braking Resistor (TCBR) or by a battery energy storage system provided in the PV solar system, (see Figure 6). These are supplementary and optional controls.

On the other hand, if $d(\Delta\delta)/dt$ or $\Delta f$ is negative, i.e., the generator rotor is decelerating due to loss of kinetic energy, the multivariable modulator operates to increase real power output above the same predetermined setpoint. This effectively opposes generator deceleration.

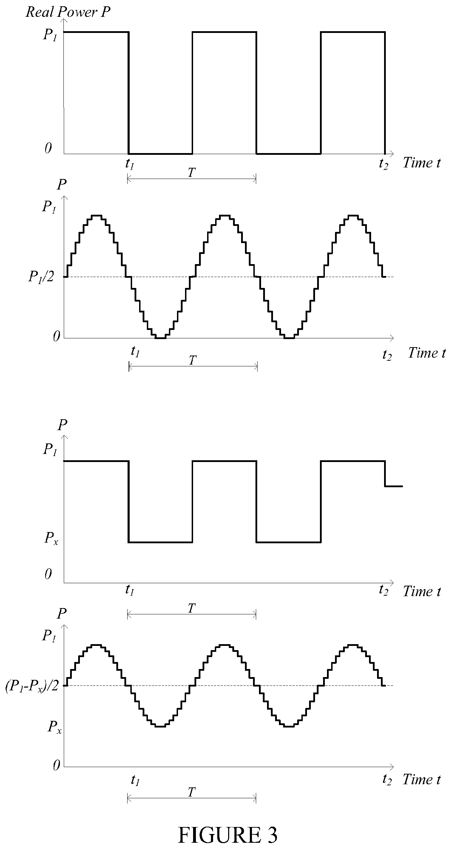

The real power output from the PV solar system is thus modulated around a predetermined setpoint in response to power system modal oscillations. Some possible cases of real power modulation are illustrated in Figure 3. The setpoint can typically be $P_1/2$, i.e., half of the real power output corresponding to solar radiation at that time instant. The waveforms for a $P_1/2$ setpoint are presented as the top two waveforms in Figure 3. The setpoint can also be $(P_1 - P_x)/2$, where $P_x$ is a value of power output less than the maximum available during the period of modulation. The waveforms for this setpoint are presented as the bottom two waveforms in Figure 3. While the magnitude of the modulations in real power are illustrated to be constant in Figure 3, the magnitude of modulations can decrease with time, depending upon the system need.

While the above discusses modulating only reactive power or real power, according to the invention both of these are modulated simultaneously in a decoupled (independent) manner. Such a control approach provides flexibility to the multivariable modulator controller's response to detected oscillations.

In this hybrid method, real power $P$ is modulated as described above. The variable remaining inverter capacity $\sqrt{(S_{max}^2 - P^2)}$ is then utilized for reactive power modulation by the multivariable modulator controller.

This combination of real and reactive power modulation in a decoupled manner is part of the method for stabilization of the power transmission system according to the present invention.

To implement real power modulation, especially in PV solar farms or solar-based power generation facilities, solar panels may be switched in and out of power production. As well, the power generation system may be configured to produce less than optimum power.

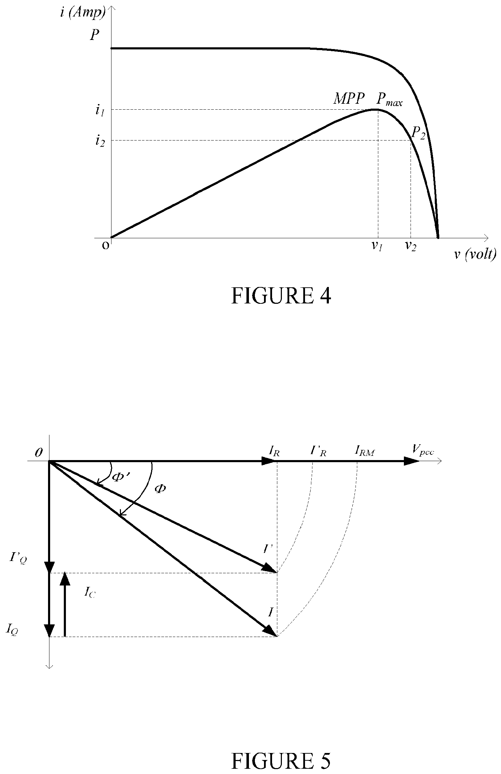

The typical DC current ($i$) versus DC voltage ($v$) characteristic and the DC power ($P$) versus DC voltage ($v$) characteristic of a solar cell/panel are depicted in Figure 4. $P_{max}$ denotes the power output at the Maximum Power Point (MPP) of the solar panel corresponding to operating voltage $v_1$ and current $i_1$. Various Maximum Power Point Tracking (MPPT) techniques are described in literature (see, for example, IEEE Task Force on Modeling and Analysis of Electronically-Coupled Distributed Resources, "Modeling Guidelines and a Benchmark for Power System Simulation Studies of Three-Phase Single-Stage Photovoltaic System", IEEE Transactions on Power Delivery, Vol. 26. No. 2, April 2011, pp. 1247-1264, which will be hereinafter referred to as IEEE Task Force Reference). Solar panels are always operated at MPP for maximum power generation.

The solar panel may also be operated at a non-maximum power point. $P_2$ denotes one such operating point when the power output from the solar panel is lower than the maximum possible amount for that given solar radiation. The corresponding operating voltage is $v_2$ and current is $i_2$. Solar panels will typically not be operated at such a non-MPP on a continual basis, as this will lead to lower power generation.

In one aspect of the invention, the real power output of the solar farm is rapidly modulated or varied by switching in or out solar panels from power production.

In the first technique, the solar panels are switched in or out through a matrix of fast solid-state switches, with the connected solar panels being operated at maximum power point (MPP).

In this first technique, each solar panel or sets of solar panels are connected to the inverter through a very fast operating solid-state switch that can open or close within a few milliseconds. Several sets of panels are thus connected to the inverter through a matrix of switches. Since the power system oscillations that need to be controlled through the power modulation have time periods ranging from typically 30 ms (torsional oscillations) to few seconds (inter-area oscillations), the operating time of these switches will not affect the effectiveness of the multivariable modulator controller.

Such a control is easily implemented in a single stage PV solar system (as described in the IEEE Task Force Reference above), in which the solar panels are directly connected to the PV inverter.

An alternative for switching the PV solar panels in and out is described as follows. In several PV panel implementations (such as in microinverters), individual solar panel or a set of PV panels has its own associated power electronic DC-DC converter that produces appropriate controllable DC voltages on either side. Thus in a solar farm, there are several DC-DC converters, each corresponding to an individual set of solar panels. The DC outputs of each of these DC-DC converters are combined to produce the net DC power at the appropriate DC voltage that is fed to the solar farm inverter(s). The DC-DC converters are based on very fast acting semiconductor switches. Thus the "switching in" and "switching out" of PV panels can be achieved rapidly by "turning on" or "turning off" the firing pulses to the semiconductor switches inside the DC-DC converter.

Another technique is where the solar panels are not switched in or out, but some or all are operated at non-maximum power point (non-MPP). According to this technique, the operating points of the solar panels are rapidly modulated in the non-maximum power operating range. The multivariable modulator controller varies the voltage across the solar panels to obtain the desired variation in real power output during the period of modulation.

Such a control scheme may be implemented on a single stage PV solar system. However, it is more suitable in a two-stage PV solar system, in which the solar panels are connected to the PV inverter through a common DC-DC converter for the entire set of PV solar panels. The DC-DC converter ensures a constant voltage at the input of the inverter, even though the output voltage of the solar panels is varying.

It is emphasized that the control technique of switching in or out of the solar panels is faster than the technique of operating solar panels at variable non-optimum or non-maximum power points (non-MPP).

For a PV solar farm implementation of the two real power modulation schemes noted above, again, day time and night time implementations are required.

For a night time implementation, the multivariable modulator controller would provide dynamic modulation of reactive power by utilizing the full inverter capacity of the PV solar farm to damp power system oscillations. Real power modulation is not available during night time for PV solar farms.

For a day time implementation, if detrimental power system oscillations are observed, the multivariable modulator controller would discontinue the normal real power generation operation of the PV solar system, partly or fully. Once this is done, the controller then starts to modulate the real power P in response to the power system oscillations, as described above.

Simultaneously, reactive power modulation is also commenced in response to the power system oscillations in a decoupled control mode. The bus voltage is correspondingly modulated around its reference value. The inverter capacity that remains after real power modulation $\sqrt{(S_{max}^2 - P^2)}$ is utilized for reactive power modulation.

It is noted that the reactive power modulation control also mitigates any system voltage fluctuations arising out of switching of solar panels or by real power modulation.

As soon as the power system oscillations settle down to less than the values specified by utility standards of stability, the multivariable modulator controller will return the PV solar farm to its normal real power production with all PV panels connected, and based on solar radiation availability.

It should be noted that the multivariable modulator controller may also modulate the frequency of the real power output of the solar farm.

However, the magnitude of power modulations will be determined by the amount of solar radiation available at that time instant.

The full inverter capacity of the PV solar farm is utilized for the combination of real power modulation and reactive power modulation in a decoupled manner.

The proposed invention of modulation of both real and reactive power in a decoupled manner also improves the transient stability of the power system as well as improves the power transfer capacity of transmission lines.

It should be noted that the decision to commence real power modulation and reactive power modulation, as well as the period of modulation, is autonomously determined by the multivariable modulator based on the magnitude and duration of power system oscillations detected.

The decision to commence real power modulation and reactive power modulation, as well as the period of modulation, may also be communicated by the system operator to the multivariable modulator, based on the magnitude and duration of power system oscillations.

Power generation facilities, and especially PV solar farms, can also contribute to the stability of the system frequency.

Photovoltaic solar farms do not have any rotating parts, such as those used in synchronous generators, and hence do not have any inertia. A large number of microgrids around the globe, which have PV solar farms installed, face the problem of frequency regulation since the solar farms lack inertia. This inertia is much needed during power system disturbances to regulate frequency and to thereby ensure system stability.

In this aspect of the invention, a PV solar farm is controlled so as to emulate inertia much like a synchronous generator and can thereby contribute to frequency regulation. During situations leading to an imbalance between generation and load in the power system, such as when generators or loads are switched, or during a disturbance, a synchronous generator produces power oscillations with a magnitude and frequency depending upon the value of the inertia of its rotating mass. This effect can be approximated in a PV solar farm by modulating both the magnitude and the frequency of the real power output of the solar farm.

For this concept, the multivariable modulator controller varies the power output of the solar system in a controlled manner. This control will result in a variable real power output that is similar to that produced by a synchronous generator under similar circumstances, thereby presenting usable inertia to the power system. As noted above, this variable real power output will be with the objective of reducing the imbalance between the generation and the load in the interconnected power system.

System frequency increases when the power generation exceeds the load in the power system. When this occurs, the multivariable modulator controller will decrease the power output from the PV solar system.

System frequency decreases when the power generation becomes lower than the load in the power system. When this occurs, the multivariable modulator controller will increase the power output from the PV solar system.

To implement this frequency stability enhancing control scheme, it should be noted that it can only be implemented during day time for PV solar farms. It should be quite clear that PV solar farms do not produce real power at night and, as such, real power production cannot be increased or decreased at night.

For a day time implementation, the multivariable modulator controller modulates the power production about a specific setpoint. If the system data collected by the modulator controller indicates that the PV solar farm is required to perform frequency stabilization, the modulator controller will discontinue the normal real power generation operation of the PV solar system partly or fully. The controller will start to modulate the real power output of the PV solar system around a setpoint that can be, for example, half of the real power output corresponding to solar radiation at that time instant, as described above.

It should be noted that the multivariable modulator controller may also modulate the frequency of the real power output of the solar farm, thereby artificially emulating inertia of a synchronous generator.

It should be clear that the magnitude of the power modulations is dependent on the amount of solar radiation available at that time instant.

The multivariable modulator controller can also perform reactive power modulation simultaneously with the remaining inverter capacity in a decoupled manner. This is mainly for two reasons. Reactive power modulation can mitigate any voltage fluctuations arising from real power modulation. Also, reactive power modulation can control the PCC bus voltage which will in turn control the real power consumption of the power system loads. This control indirectly reduces the imbalance between generation and loads in the power system, thereby reducing frequency oscillations.

It has been proposed in literature that if PV solar farms are involved in frequency regulation, they should continuously operate at levels that are substantially lower than the optimal operating point known as Maximum Power Point (MPP), i.e., with a large margin below the MPP. With the technique proposed in the present invention of combined real and reactive power modulation in a decoupled manner, PV solar inverters will either not be required to continuously operate at non optimal, i.e., non MPP level, or will need to continuously operate at levels that are only slightly lower than the MPP, i.e., with a much lower margin below the MPP.

Once the system frequency oscillations settle down to less than the values specified by utility standards of stability or to an acceptable predetermined level, the modulator controller will return the PV solar farm to its normal real power production with all solar panels connected.

As was the case with the previously described techniques, the decision to commence real power modulation, as well as the period of modulation, is autonomously determined by the modulator controller based on the magnitude and duration of the unacceptable frequency oscillations is the power system.

The decision to commence real power modulation, as well as the period of modulation, may also be communicated by the system operator to the multivariable modulator, based on the magnitude and duration of frequency oscillations.

It is emphasized that this above technique of real power modulation in response to system frequency oscillations may be distinguished over the conventionally utilized slow ramping of real power production of PV solar farms during system frequency variations.

It is also readily understood that the real power modulation is not achieved by adding an energy storage system and then charging/discharging it to produce variable real power. The real power modulation is accomplished with only the available solar power from the PV panels.

In another aspect of the invention, the multivariable modulator controller creates more room in the power transmission/distribution lines for carrying real power, especially during conditions when the lines are operating at or close to their thermal limits. Using this technique, the PV solar farm can also create additional capacity in the lines to carry power generated by other generating sources in the network. The multivariable modulator controller will thus allow more Distributed Generators and conventional generators to be connected in networks. Previously, these generators could not be connected since lines were already operating close to their thermal limits.

The multivariable modulator controller increases the transmission capacity of power distribution lines by improving the power factor of the distribution line at the point of interconnection. This power factor improvement is for both balanced and unbalanced operation of the distribution lines. This control of line power factor is different than the control of power factor at the terminals of the PV inverter.

This control technique increases the flow of real power over distribution lines while maintaining the magnitude of line current constant at or less than the utility prescribed thermal limit. Using this aspect of the invention, PV solar farm inverters can dynamically exchange (inject/absorb) reactive power with the power distribution lines in order to minimize the net flow of reactive power flow over the line. The PV solar farm can act alone or in coordination with passive devices such as switched capacitors or switched inductors (reactors), as shown in Fig. 6.

This aspect of the invention will be explained with reference to Figure 5. Let $V_{pcc}$ be the voltage at the point of common coupling (PCC) of the PV solar system. Utilities typically specify the line thermal limit by a maximum magnitude of current flow $I$, corresponding to the maximum acceptable heating line loss $I^2R$. With respect to Figure 1, the current I corresponds to the thermal limit of the current $I_{LOUT}$ which flows between the PCC of the solar farm and the Area 2 towards the right of the figure. Utilities also specify an operating power factor $\Phi$ for the flow of current $I$ in the transmission line. This is typically 0.9.

Returning to Figure 5, this figure depicts the phasor diagram in which $I_R$ and $I_Q$ represent the real and reactive components of the line current at thermal limit $I$. It should be noted that the magnitude of $I_R$ is less than the magnitude of $I$. The multivariable modulator controller in the PV solar farm dynamically injects capacitive current $I_C$, thereby reducing the reactive component of the line current to $I'_Q$, and the power factor angle to $\Phi'$. The magnitude of the resulting line current is $I'$, which is less than the thermal limit $I$. The line can therefore carry an additional real current, which is the difference between the magnitudes of $I$ and $I'$. The magnitude of this additional current is $I_{RM} - I_R'$. In other words, an additional Distributed Generator (DG) with a rating $I_{RM} - I_R'$ can be connected in the line between the PCC and the Area 2. Such a Distributed Generator could not be connected earlier due to thermal constraints of the transmission line. In the ideal case, if the entire reactive component $I_Q$ can be compensated for by the multivariable modulator controller, an additional capacity of $I_{RM} - I_R$ can be created in the line i.e., in the direction of line current flow.

To implement the above described scheme in a PV solar farm, again night time and day time implementations will need to be used.

For the night time implementation for a PV solar farm, the multivariable modulator controller uses the full inverter capacity to provide dynamic modulation of reactive power to control the line power factor to as close to unity as possible.

For a day time implementation, the multivariable modulator controller uses the inverter capacity available after real power generation for dynamic modulation of reactive power. This is implemented in conjunction with switchable capacitors and reactors to control the line power factor to as close to unity as possible.

It should be noted that the real power generation function of the solar farm will not be curtailed. This real power generation function will be reduced or stopped for a brief period only if during that period, both in steady state or during disturbances, the power from the new DG to be added is more important/critical than the real power generation from the solar farm.

In another aspect of the invention, the multivariable modulator controller can also help improve voltage stability for the power transmission system. Voltage instability is potentially caused by a lack of dynamic reactive power support in power systems. A system undergoing voltage instability is characterized by an uncontrolled decline or collapse in voltage, subsequent to a system disturbance, such as a fault or a line outage.

The multivariable modulator controller can provide voltage regulation and mitigation of voltage disturbances such as voltage swells, voltage sags and Temporary Over Voltages (TOVs) during faults, etc. This is done with the objective to control the power transmission system's bus voltage to within specified limits.

For a night time implementation of the above noted control scheme, the multivariable modulator controller uses the full inverter capacity of the PV solar farm. Since real power is not produced by the PV solar farm at night, all of the solar farm's inverter capacity can be used to dynamically modulate reactive power from the solar farm. As noted above, this reactive power can be used to control the bus voltage to within specified limits.

For a day time implementation of the above noted control scheme, it should be noted that the voltage instability problem becomes more severe during daytime due to increased system loading. If the bus voltage declines by such a large amount that the decline cannot be corrected by reactive power modulation using the inverter capacity remaining after real power generation, the multivariable modulator controller can disconnect some or all of the PV solar panels. By doing this, an increased amount of inverter capacity over the inverter capacity remaining after real power generation becomes available for reactive power exchange. However, when all the PV solar panels are disconnected the solar farm's entire inverter capacity can be made available to exchange reactive power with the grid and thereby regulate the bus voltage. As soon as the bus voltage returns to values within utility specified limits or to within predetermined acceptable limits, the solar panels can be reconnected and the system will resume normal solar power generation.

One of the problems faced by power systems is Temporary Overvoltages during unsymmetrical faults (such as line to ground fault, etc.). If the bus voltage increases by such a large amount that the voltage rise cannot be corrected by reactive power modulation using the inverter capacity remaining after real power generation, the multivariable modulator controller can disconnect some or all of the PV solar panels. By doing this, an increased amount of inverter capacity over the inverter capacity remaining after real power generation becomes available for reactive power exchange. However, when all the PV solar panels are disconnected the solar farm's entire inverter capacity can be made available to exchange reactive power with the grid and thereby regulate the bus voltage. As soon as the bus voltage returns to values within utility specified limits or to within predetermined acceptable limits, the solar panels can be reconnected and the system will resume normal solar power generation.

During the period when the bus voltage exceeds acceptable limits, real power modulation as described previously, can also be implemented together with reactive power modulation in a decoupled manner, to further augment the capability for voltage regulation.

The decision to curtail real power production to provide both reactive and real power modulation in a decoupled manner, and the duration of this modulation are autonomously determined by the multivariable modulator controller based on the voltage magnitude sensed at PCC and the duration of the disturbance.

The decision to curtail real power production to provide both reactive and real power modulation in a decoupled manner, and the duration of this modulation, may also be communicated by the system operator to the multivariable modulator, based on the magnitude of bus voltages and the duration of the disturbance.

It should be clear that the primary function of PV solar farms is the generation of real power at unity power factor during daytime. In conventional operation, solar farms are not used at night. Because of this, solar farms can utilize their entire inverter capacity at night to earn new revenues by providing some key power system benefits. However, these benefits are generally of limited value as they cannot be provided by the solar farm during the day.

While the above may be true, if the solar farms are adequately compensated, they can temporarily cease their normal power production and provide much needed system support. As noted above, this system support may help ensure system stability and also to further increase it. As this period of halting solar power production is anticipated to be for a few minutes at most, this will not cause much financial loss to the solar farm owner or operator. However, the critical services provided by the solar farm during this time period may ultimately earn higher revenues for the solar farm owner.

It should be noted that the answer to the question of which function is to take precedence for a specific solar farm is one which must previously be agreed upon by the solar farm owner/operator, the interconnecting utility company and the power system operator. As noted above, the solar farm can contribute to the stability of the power transmission system. The utility company may decide to compensate the solar farm operator for the enhanced stability provided by the solar farm. If the compensation is greater than what the solar farm operator would normally receive for power generated by the solar farm, the utility company can therefore render it worthwhile for the solar farm operator to cease real power production, for a given period, and dedicate the full inverter capacity towards enhancing system stability. Given that the system's stability can be enhanced in multiple ways (as noted above), the question of which function takes precedence for enhancing the system stability can be prearranged and can also be preprogrammed into the multivariable modulator controller's operating software.

Regarding the implementation of the multivariable modulator, reference is made to Figure 6. Fig. 6 illustrates a typical two area power system connected through a transmission line. Area 1 comprises a generation and load complex represented by an equivalent generator $G_1$. Area 2 consists also of a generation and load complex modelled by an equivalent generator $G_2$. A PV solar power generation system is connected at an intermediate location called the point of common coupling (PCC) in the transmission line. The voltage at the PCC is denoted by $V_{pcc}$. The total current injected by the PV solar power generation system into the PCC is given by $T_{pcc}$. $P_{LIN}$ and $P_{LOUT}$ denote the incoming and outgoing real powers at the PCC, respectively. $Q_{LIN}$ and $Q_{LOUT}$ describe the incoming and outgoing reactive powers at the PCC, respectively. $I_{LIN}$ and $I_{LOUT}$ indicate the incoming and outgoing line currents at the PCC, respectively. The symbols $f_{Gen1}$ and $f_{Gen2}$ represent the frequencies of Generator 1 and Generator 2, respectively.

The PV solar power generation system consists of a set of m inverters $INV_1$- $INV_m$ each connected to the PCC through transformers (not shown). As an example, Inverter 1 generates a current $I_{inv1}$ and has a terminal voltage $V_{inv1}$. Further, it produces real power $P_{g1}$ and reactive power $Q_{g1}$. The total real power injected by the PV solar power generation system is given by $P_g$ and reactive power expressed by $Q_g$. Each inverter is typically fed through a set of n solar panels. These solar panels are connected to a combiner box through a set of n power electronic switches. For instance, the switches for $INV_1$ are named $S_{11}, S_{21}, ... S_{n1}$. Similar switches are provided for panels for other inverters. As explained before, in an alternate implementation of the same switching functionality, the switches $S_{11}, S_{21},... S_{n1}$ may be construed to be the switches to "turn on" or "turn off" the firing pulses to semiconductor devices in DC-DC converters (not shown) installed between the panels and the combiner box. A bus inductor $X_L$ and a bus capacitor $X_C$ are connected to the PCC through breakers $S_L$, and $S_C$. The bus inductor $X_L$ could be a set of inductors. Likewise, the bus capacitor $X_C$ could be a set of bus capacitors.

It should be noted that, as an option, a Thyristor Controller Braking Resistor (TCBR) (see N.G. Hingorani and L. Gyugyi, Understanding FACTS, IEEE Press, New York, USA, 1999) at the PCC through a breaker $S_{TCBR}$ to very rapidly absorb variable amounts of real power from the grid to stabilize power oscillations. In addition to the TCBR, one may also connect a Battery Energy Storage System (again noted in the above reference) at the DC terminals of each inverter through a breaker $S_{BATT}$ to allow for the very rapid exchange (absorption or injection) of variable amounts of real power with the grid to stabilize power oscillations.

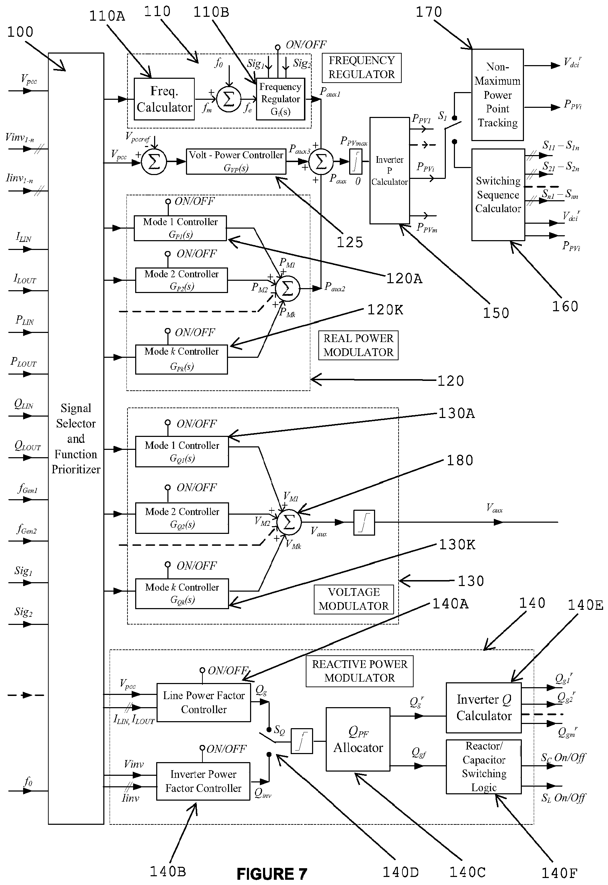

The basic PV solar farm control system is described in a paper referenced above as IEEE Task Force. The multivariable modulator controller can be added to this basic solar farm control system to provide the solar farm with the capabilities explained and enumerated above. A block diagram of the various parts of one implementation of the multivariable modulator controller is presented in Figure 7. The outputs from the multivariable modulator controller in Figure 7 correspond to the basic solar farm controllers given in the IEEE Task Force reference.

Fig. 7 illustrates the components of multivariable modulator controller for a PV solar system according to one aspect of the invention. Different control signals from the grid and the inverter terminals are fed into a Signal Selector and Function Prioritizer block 100. This block 100 selects the specific signal (or set of signals) that will be transmitted as input or inputs to each of the different regulator/modulator control subsystems. There are four control subsystems, a Frequency Regulator block 110, a Real Power Modulator block 120, a Voltage Modulator block 130, and a Reactive Power Modulator block 140. Based on previously executed agreements between the solar farm owner and the electric power utility, specific subsystems will be active and, as such, the solar farm will provide specific types of stability enhancement to the power transmission system. As an example, the utility company may request that the solar farm provide only voltage modulation and frequency regulation to the power transmission system. Thus, in this example, only the frequency regulator block 110 and the voltage regulator block 130 can be activated. Or, conversely, the utility company may require that all four blocks be active to provide stability enhancement and extra power line capacity. For this example, the utility company may request the solar farm owner to configure the multivariable modulator controller to prioritize one stability enhancement function over another. As such, an agreed upon priority sequence can be preprogrammed into the multivariable modulator controller such that, when stability enhancement is required, there is a sequence as to which stability enhancements are to be implemented. This will determine the priority sequence for the different control functions. Based on this priority sequence the Signal Selector and Function Prioritizer block 100 will issue ON/OFF signals for each sub-controller within the different blocks. The Frequency Regulator block 110, the Real Power Modulator block 120, the Voltage Modulator block 130, and the Reactive Power Modulator block 140 are described below.

For the Frequency Regulator block 110, it should be noted that this Frequency Regulator block 110 may or may not be utilized depending on the ON/OFF command issued by the Signal Selector and Function Prioritizer block 100. As noted above, whether this Frequency Regulator block is operational or not and where it sits in a priority sequence is to be predetermined and agreed upon between the utility company and the solar farm owner.

For the Frequency Regulator block 110, an appropriate set of signals from the total set of inputs will be sent to a Frequency Calculator block 110A within the Frequency Regulator block 110. These signals could be, for example, $V_{pcc}$ and $I_{LIN}$. This block 110A computes the measured system frequency $f_m$ using standard techniques, and compares it with the reference frequency $f_0$. The frequency error $f_e$ is fed to a frequency regulator 110B. A very simple model of the frequency regulator 110B (see reference, Prabha Kundur, "Power System Stability and Control" McGraw Hill, 1994, pp 589) is given by the transfer function

$$G_f(s) \;=\; -\;1/\;[R\;(1+\;sT_G)]$$

here, R is the speed regulation constant or droop, K is a gain, and time constant $T_G = 1/(KR)$.

The output of the Frequency Regulator block 110 is given by $P_{aux1}$ in Figure 7.

This block 110 increases the power output of the PV solar system when the system frequency is decaying and decreases the power output when the system frequency is increasing. The power output $P_{aux1}$ is thus modulated to maintain the system frequency at a constant value.

In a more complex model of the frequency regulator 110B, additional parameters $Sig_1$ and $Sig_2$ may be provided as inputs in an Automatic Generation Control scheme of power systems as described in the reference, Prabha Kundur, "Power System Stability and Control" McGraw Hill, 1994, at pp 617.

It should be noted the Frequency Regulator block 110 is typically slow acting when operating as a controller for the solar farm.

For the Real Power Modulator block 120, it should be noted that this oscillation damping block 120 may or may not be utilized depending on the ON/OFF command issued by the Signal Selector and Function Prioritizer block 100. As noted above, whether this damping block is operational or not and where it sits in a priority sequence is to be predetermined and agreed upon between the utility company and the solar farm owner.

Within this block 120 are $k$ sub-controllers 120A ... 120k, each of which is responsible for stabilizing one of the $k$ modes of oscillations, as described above. Each sub-controller is governed by a specific transfer function which operates to address a specific oscillation mode.

As one example, the sub-controller 120A operates to address Mode 1 oscillations. The sub-controller 120A is governed by the general transfer function

$$G_{P1}(s) = K_{P1} \cdot \left( \frac{sT_{wP1}}{1 + sT_{wP1}} \right) \left( \frac{1 + sT_{P11}}{1 + sT_{P12}} \right)^{p} \frac{1}{1 + sT_{FP11}} \frac{1}{1 + sT_{FP12}}$$

The transfer function comprises a gain $K_{P1}$, a washout stage with time constant $T_{wP1}$, and a $p^{th}$ order lead-lag compensator block, and low pass filters with time constants $T_{FP11}$ and $T_{FP12}$. The filters isolate the Mode 1 oscillations. The washout block ensures that the damping controller generates an output $P_{M1}$ only when Mode 1 oscillations are occurring. The controller block 120 provides zero output (i.e. is deactivated) when the oscillations are damped out or reduced to a level acceptable to the utility organization operating the power transmission system.

Within the block 120, the outputs $P_{M1}$, $P_{M2}$, ...$P_{Mk}$ of the $k$ sub-controllers 120A ... 120k are added in a summing junction to provide a composite power modulation signal $P_{aux2}$. It may be noted that when all the oscillatory modes are stabilized, the signal $P_{aux2}$ becomes zero.

Further, within the block 120, the PCC voltage $V_{pcc}$ is compared with the reference value of PCC voltage $V_{pccref}$ and the error signal is passed through a voltage-power controller $G_{vp}(s)$ denoted by block 125. This controller produces a power modulation signal $P_{aux3}$. It may be noted that when the PCC voltage stabilizes to within acceptable values, the signal $P_{aux3}$ becomes zero. One example implementation of the controller $G_{vp}(s)$ is given below:

$$G_{VP}(s) = \left( KP_{VP} + \frac{KI_{VP}}{s} \right)$$

where $KP_{VP}$ and $KI_{VP}$ are the proportional and integral gains of a PI controller.

The real power output signals $P_{aux1}$, $P_{aux2}$ and $P_{aux3}$ are added and the resulting power signal $P_{aux}$ is fed to the Inverter P Calculator 150 after passing through an appropriate limiter. The Inverter P Calculator 150 divides $P_{aux}$ amongst the $n$ inverters and generates the real power reference $P_{PVi}$ (= $P_{aux}/m$) for the $i^{th}$ inverter.

There are two techniques of generating the actual power $P_{PVi}$ from the $i^{th}$ inverter and each will be described below in turn.

The first method for generating actual power from the inverter is by switching PV panels rapidly through a matrix of fast acting solid-state switches.

In this method, the signal $P_{PVi}$ is fed to a switching sequence calculator 160 and this calculator generates the status (ON/OFF) of switches of the $n$ solar panels corresponding to each of the $m$ inverters, as shown in Figure 6. As an example, for the $i^{th}$ inverter, these switches are $S_{i1}$, $S_{i2}$, ..., $S_{in}$. These fast acting solid state switches operate in few milliseconds. Such an operating time is very fast compared to the slower oscillations of the power signals corresponding to 0.1 Hz (period = 10 sec) or corresponding to 30 Hz (33 msec).

In an alternate solar farm configuration where the $n$ solar panels (linked to the $i^{th}$ inverter) have their own associated DC-DC converters (not shown), the switches $S_{i1}$, $S_{i2}$, ..., $S_{in}$ are used to implement the "panel on" or "panel off" function by "turning on" or "turning off" the firing pulses to the dc-dc converters of the individual $n$ solar panels.

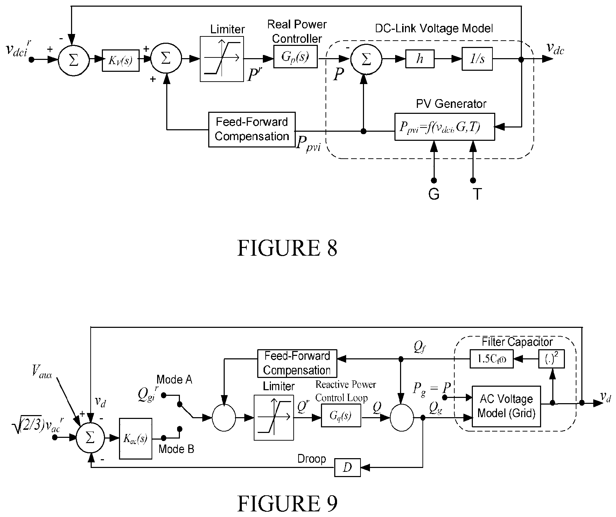

These switches cause the appropriate number of panels to be connected, each operating at maximum power point (MPP), to result in a total power output of $P_{PVi}$ for the $i^{th}$ inverter. The Maximum Power Point Tracking (MPPT) algorithm implemented in each conventional PV inverter determines the DC voltage reference $v_{dci}{}^r$ for each $i^{th}$ inverter. This signal $v_{dci}{}^r$ is fed to the input of the DC voltage control loop shown in Fig. 8.

Referring to Figure 8, it should be noted that the circuit and description below have been adapted from the IEEE Task Force reference noted above. In Figure 8, the dc-link voltage control loop processes the difference between $v_{dci}{}^r$ and $v_{dc}$ by a compensator and issues the real-power reference command for the real-power control scheme. In turn, the real-power control scheme responds to the command based on a closed-loop transfer function, say, $G_p(s)$. Thus, the real power that leaves the VSC ac-side terminals, $P$, is controlled. Ignoring the VSC power loss, $P$ is approximately equal to the power that is drawn from the VSC dc-side terminals. The difference between this power and the incoming power, $P_{pvi}$, is integrated by the dc-link capacitor and results in a voltage rise or fall. In a steady state, $v_{dc}$ settles at $v_{dci}{}^r$, due to the integral term of $K_v(s)$, and P is equal to $P_{pvi}$ (i.e., the power delivered to the grid is equal to the power generated by the PV generator).

It should be noted that problems may arise during proper tuning of $K_v(s)$. One of these issues is the dependence of $P_{pvi}$ on $v_{dc}$. It can be seen from Figure 8 that this dependence corresponds to an additional inherent feedback loop within the control plant designated by the dashed box. To mitigate this issue of dependence, the output of $K_v(s)$ may be supplemented with a feedforward compensation that is a version of $P_{pvi}$. This feedforward effectively opens the internal feedback loop and transforms the control plant to an integrator.

In steady state, the DC link voltage will settle to $v_{dci}{}^r$, and the real power output of the PV panel become equal to $P_{PVi}$.

The second method for generating actual real power from the inverter is by operating the solar panels at Non - Maximum Power Point (Non-MPP) to result in variable power.

In this second method, the desired power output signal $P_{PVi}$ is fed to a Non- Maximum PPT (Non-MPP) controller block 170, which determines a non-optimal operating point $v_{dci}{}^r$ of each PV panel to result in actual PV power output $P_{PVi}$. This is based on the $i$-$v$ characteristic and $P$-$v$ characteristic of the specific solar panels utilized in the PV solar system, as shown in the graphs in Fig. 4. It should be noted that, at this operating point, the PV panels do not produce the maximum power (MPP) corresponding to the available solar radiation $G$ and Temperature $T$. This signal $v_{dci}{}^r$ is fed to the input of the DC voltage control loop depicted in Fig. 8.

The variable (oscillatory) nature of $P_{PVi}$ will result in a variable $v_{dci}{}^r$.

It should further be noted that the Real Power Modulator 120 is a fast acting controller.

Referring to the voltage modulator block 130, this block is responsible for damping oscillations in the power transmission system.

Similar to the Real Power Modulator block 120, the voltage modulator block 130 may or may not be utilized depending on the ON/OFF command issued by the Signal Selector and Function Prioritizer block 100. As noted above, whether this damping block is operational or not and where it sits in a priority sequence is to be predetermined and agreed upon between the utility company and the solar farm owner.

The voltage modulator block 130 has, similar to block 120, has $k$ sub-controllers 130A ... 130k, each of which is responsible for stabilizing one of the $k$ modes of oscillations as described above.

As one example of a sub-controller, each of which is defined by a transfer function, the Mode 1 damping sub-controller 130A is defined by the general transfer function

$$G_{Q1}(s) = K_{Q1} \left( \frac{sT_{wQ1}}{1+sT_{wQ1}} \right) \left( \frac{1+sT_{Q11}}{1+sT_{Q12}} \right)^p \frac{1}{1+sT_{FQ11}} \frac{1}{1+sT_{FQ12}}.$$

The transfer function has a gain $K_{Q1}$, a washout stage with time constant $T_{wQ1}$, and a $p^{th}$ order lead-lag compensator block, and low pass filters with time constants $T_{FQ11}$ and $T_{FQ12}$.

The filters isolate the Mode 1 oscillations. The washout block ensures that the damping controller generates an output $V_{m1}$ only when Mode 1 oscillations are indeed occurring. The controller provides zero output (i.e. is deactivated) when the oscillations are damped out or when the oscillations reach a predetermined acceptable level.

The outputs of the k sub-controllers, $V_{M1}$, $V_{M1}$, ...$V_{Mk}$ are added in a summing junction 135 to provide a composite power modulation signal $V_{aux}$. It may be noted that when all the oscillatory modes are stabilized, the signal $V_{aux}$ becomes zero.

This signal $V_{aux}$ is fed to the summing junction for Mode B operation of the VAr/ac voltage regulation scheme of the PV inverter as depicted in Fig. 9

Fig. 9 illustrates a block diagram of a potential VAr/ac-voltage regulation scheme which may be used with the invention. From Figure 9, the regulation scheme may operate either in the VAr control mode (i.e. Mode A) or in the ac-voltage control mode (i.e. Mode B).

Figure 9 shows that in Mode A the desired reactive-power to be delivered to the grid, $Q^r_{gi}$, determines $Q^r$. This means that the reference command for the reactive-power control scheme above, based on most prevalent standards, $Q^r_g$ must be set to zero, to ensure that the PV system exhibits unity power factor to the grid. To compensate for the reactive power that the shunt filter capacitors deliver, a feedforward signal that is a negative of a measure of the capacitor reactive power has been added to the reference command. The capacitor reactive power can be readily estimated by as $Q_f = 1.5C_f\omega_0 v^2_d$, where $\omega_0$ is the grid nominal frequency, and can either be approximated by the nominal value of the grid line-to-neutral voltage or dynamically obtained from a synchronization scheme.

In Mode B, however, the PCC voltage $V_{pcc}$ is regulated at a reference value which is expressed in terms of the line-to-line rms voltage and denoted by $v^r_{ac}$. Thus, the compensator processes the error and issues a control signal for the reactive-power control scheme. Since a discrepancy between $v^r_{ac}$ and the grid natural voltage may require a prohibitively large reactive-power injection/absorption by the PV system, a measure of $Q_g$ should be included in the loop, through a droop mechanism, to adjust the reference voltage command. Hence, the voltage regulation degree will depend on the droop coefficient, $D$. The droop mechanism is also important in PV systems with multiple paralleled units, in terms of reactive-power sharing, in case more than one unit operates in Mode B. As Fig. 9 shows, in both modes, Mode A and Mode B, $Q^r$ is constrained by a saturation block whose limits are, in general, functions of the VSC real-power output. This ensures that the VSC capacity is reserved for real-power transfer, which is the prime function of the PV system.

It should be noted that Figure 9 and its description are modified from the IEEE Task Force reference noted above.

It should be noted that this Voltage Modulator block 130 is a fast acting controller.

The final controller block in Figure 7 is the Reactive Power Modulator block 140. This modulator 140 can control the line power factor or the inverter power factor by way of either the Line Power Factor Control sub-block 140A or the Inverter Power Factor Control sub-block 140B.

The Power Modulator block 140 has a Line Power Factor Controller sub-block 140A. The sub-block 140A utilizes transmission line parameters, such as, $V_{pcc}$, $I_{LIN}$ and $I_{LOUT}$ to compute the line power factor, either on the incoming or outgoing side of the PCC, as per the requirements. The sub-block 140A then determines the total reactive power that needs to be exchanged (injected/absorbed) by the PV solar system with the grid either symmetrically or asymmetrically, $Q_g$ to implement this power factor. The $Q_{PF}$ Allocator sub-block 140C obtains this $Q_g$ through the switch $S_Q$ 140D and splits it into a fixed part $Q_{gf}$ and a variable part $Q_g^r$. The Inverter Q Calculator sub-block 140E further divides $Q_g^r$ amongst the $m$ inverters and generates the reactive power reference $Q_{gi}^r$ ( $= Q_g^r /m$) for the $i^{th}$ inverter. This signal is fed to the Mode A input of the VAr/ac voltage regulation scheme of the PV inverter as depicted in Fig. 9.

The fixed part $Q_{gf}$ is received by the Reactor/Capacitor Switching Logic sub-block 140F to generate ON/OFF commands to switch the bus reactor (s) $X_L$ or bus capacitor (s) $X_c$, as appropriate.

In steady state, the reactive power output of each inverter will become to $Q_{gi}^r$.

The other main sub-block of the Reactive Power Modulator block 140 is the Inverter Power Factor Controller sub-block 140B. This sub-block 140B controller utilizes Inverter voltages $V_{inv}$ and inverter currents, $I_{INV1}$ - $I_{INVm}$ to compute the inverter power factor of the different inverters. Ideally, all the inverters should operate at unity power factor. If a different inverter power factor is desired, the Inverter PF Controller sub-block 140B computes the total reactive power $Q_{inv}$ that needs to be injected by the inverters to implement this power factor. The $Q_{PF}$ Allocator 140C obtains this $Q_{inv}$ through the switch $S_Q$ and transfers it as $Q_g^r$ (=$Q_{inv}$) to the Inverter Q Calculator sub-block 140E. This further divides $Q_g^r$ amongst the m inverters and generates the reactive power reference $Q_{gi}^r$ (= $Q_g^r /m$) for the $i^{th}$ inverter. This signal is fed to the Mode A input of the VAr/ac voltage regulation scheme of the PV inverter as depicted in Fig. 9. No fixed reactor/capacitor is needed in this portion of the system.

In steady state, the reactive power output of each inverter will become to $Q_{gi}^r$.

This Reactive Power Modulator block 140 is a relatively slow acting controller, as the variations in power factor are not fast.

Regarding limits in the multivariable modulator controller scheme, the Q limits on the Limiter in the VAr/ac voltage regulation scheme depicted in Fig. 9 for the different functions performed by the multivariable modulator controller are shown in the table below. Reference may also be made to Fig. 8 to identify some variables mentioned in the table below.

| No. | Multivariable Modulator Function | Night | Day |
|---|---|---|---|
| 1. | Frequency Regulation | Set $P_{PV}$ =0; $Q_{rLIM}$= $\sqrt{(S_{max} -P_r^2)}$ | $Q_{rLIM} = \sqrt{(S_{max} -P_r^2)}$ |
| 2. | Real Power Modulation | Set $P_{PV}$ =0; $Q_{rLIM}$ = $\sqrt{(S_{max} -P_r^2)}$ | $Q_{rLIM} = \sqrt{(S_{max} -P_r^2)}$ |
| 3. | Modal Oscillation Damping with only Reactive Power Modulation | Set $P_{PV}$ =0; $Q_{rLIM}$= $\sqrt{(S_{max} -P_r^2)}$ | i) If $Q_r < \sqrt{(S_{max} - P_{PV}^2)}$, $Q_{rLIM} = \sqrt{(S_{max} -P_r^2)}$ ii) If $Q_r > \sqrt{(S_{max} -P_{pv}^2)}$, Disconnect appropriate number of PV panels, or all PV panels. Set $P_{PV}$=power output of remaining connected panels, or $P_{PV}$ =0, respectively; $Q_{rLIM} = \sqrt{(S_{max} -P_r^2)}$ |
| 4. | Modal Oscillation Damping with both Reactive and Real Power Modulation | Set $P_{PV}$ =0; $Q_{rLIM}$= $\sqrt{(S_{max} -P_r^2)}$ | $Q_{rLIM} = \sqrt{(S_{max} -P_r^2)}$ |
| 5. | Voltage Stabilization with remaining inverter capacity using Reactive Power Modulation | Set $P_{PV}$ =0; $Q_{rLIM}$ = $\sqrt{(S_{max} -P_r^2)}$ | $Q_{rLIM} = \sqrt{(S_{max} -P_{PV}^2)}$ |
| 6. | Voltage Stabilization with partial or full inverter capacity using both Reactive and Real Power Modulation | Set $P_{PV}$ =0; $Q_{rLiM}$= $\sqrt{(S_{MAX} -P_R^2)}$ | i) If $Q_r < \sqrt{(S_{MAX}- P_{PV}^2)}$, $Q_{rLIM} = \sqrt{(S_{MAX} - P_r^2)}$ ii) If $Q_r > \sqrt{(S_{MAX} -P_{PV}^2)}$, Disconnect appropriate number of PV panels, or all PV panels. Set $P_{PV}$ =power output of remaining connected panels, or $P_{PV}$ =0, respectively; $Q_{rLIM} = \sqrt{(S_{max} -P_r^2)}$ |

In all the above described comparators where a quantity is compared with its reference value, suitable hysteresis and time delays may be incorporated to avoid hunting or oscillations around the reference value.

From the above description, it should be clear that the multivariable modulator controller initially detects a need for enhanced system stability based on input from the power transmission system or from the generators attached to the power transmission system. The controller then, based on the controller configuration as agreed upon by the solar farm operator and the utility company, initiates measures which would increase system stability. This can be done by modulating real power production, modulating reactive power, modulating both real and reactive power in a decoupled manner, injecting and varying real power, injecting or absorbing reactive power, or by changing the parameters of the solar farm's energy production. As these measures are being implemented, the multivariable modulator controller continually reads and detects the parameters governing the power transmission system. Once the need for enhanced system stability has passed, the multivariable modulator controller can cease the system stability enhancement measures and can then return the power generation facility to its regular operating mode.

The embodiments of the invention may be executed by a computer processor or similar device programmed in the manner of method steps, or may be executed by an electronic system which is provided with means for executing these steps. Similarly, an electronic memory means such as computer diskettes, CD-ROMs, Random Access Memory (RAM), Read Only Memory (ROM) or similar computer software storage media known in the art, may be programmed to execute such method steps. As well, electronic signals representing these method steps may also be transmitted via a communication network.

Embodiments of the invention may be implemented in any conventional computer programming language. For example, preferred embodiments may be implemented in a procedural programming language (e.g."C") or an object-oriented language (e.g."C++", "java", "PHP", "PYTHON" or "C#"). Alternative embodiments of the invention may be implemented as pre-programmed hardware elements, other related components, or as a combination of hardware and software components.

Embodiments can be implemented as a computer program product for use with a computer system. Such implementations may include a series of computer instructions fixed either on a tangible medium, such as a computer readable medium (e.g., a diskette, CD-ROM, ROM, or fixed disk) or transmittable to a computer system, via a modem or other interface device, such as a communications adapter connected to a network over a medium. The medium may be either a tangible medium (e.g., optical or electrical communications lines) or a medium implemented with wireless techniques (e.g., microwave, infrared or other transmission techniques). The series of computer instructions embodies all or part of the functionality previously described herein. Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies. It is expected that such a computer program product may be distributed as a removable medium with accompanying printed or electronic documentation (e.g., shrink-wrapped software), preloaded with a computer system (e.g., on system ROM or fixed disk), or distributed from a server over a network (e.g., the Internet or World Wide Web). Of course, some embodiments of the invention may be implemented as a combination of both software (e.g., a computer program product) and hardware. Still other embodiments of the invention may be implemented as entirely hardware, or entirely software (e.g., a computer program product).

**Claims**

1. A method for enhancing stability in a power system to which is coupled a power generation facility, wherein said power generation facility is a photovoltaic based solar farm including solar panels, the method comprising:

   a) detecting a need for enhancing system stability in said power system;
   b) modulating a combination of real and reactive power, said real power and said reactive power being provided by said power generation facility by disconnecting and connecting some or all of said solar panels to perform real power modulation and using inverter capacity of said power generation facility to exchange reactive power with said power system; and
   c) providing said combination of said modulated real power and said modulated reactive power from said power generation facility to said power system;
   wherein

   - a modulation of said combination of real and reactive power is performed simultaneously in a decoupled manner,
   - step b) further comprises operating at least one inverter of said power generation facility to use at least a portion of said at least one inverter's capacity to provide said combination of said modulated real power and said modulated reactive power, and
   - said combination of said modulated real power and said modulated reactive power from step b) increases said stability of said power system by performing at least one of:

     - damping system oscillations;
     - increasing transient stability;
     - regulating power system frequency;
     - improving voltage stability;
     - increasing power transmission capacity in transmission lines; and
     - increasing power transmission capacity in distribution lines.

2. A method according to claim 1, wherein step b) comprises operating at least one solar panel at less than a maximum capacity.

3. A method according to claim 1, wherein step b) is accomplished by varying real power production of said power generation facility within an available range of solar power for the said photovoltaic based solar farm.

4. A method according to claim 1, wherein said power generation facility is operated such that any remaining inverter capacity in said power generation facility after real power production is used for reactive power exchange.

5. A method according to claim 1, wherein a transmission capacity is increased for said power system by providing at least one of modulated reactive power, modulated real power, and a combination of said modulated reactive power and said modulated real power to said power transmission system and a power distribution system, said at least one of said modulated reactive power, said modulated real power, and said combination of said modulated reactive power and said modulated real power being provided by said power generation facility.

6. A method according to claim 1, wherein step a) involves autonomously detecting a need for enhancing system stability in the power system.

7. A method according to claim 1, wherein step a) involves detecting a need for enhancing system stability in said power system based on communication by a power system operator.

8. A method according to claim 1, where said power generation facility provides at least one of: said modulated reactive power, said modulated real power, and said combination of said modulated real power and said modulated reactive power to said power system for a duration of time in which a need for enhancing system stability is experienced by the power system.


**Patentansprüche**

1. Verfahren zur Verbesserung der Stabilität in einem Stromversorgungssystem, an das eine Stromerzeugungsanlage gekoppelt ist, wobei die Stromerzeugungsanlage eine photovoltaikbasierte Solarfarm einschließlich Solarpanels ist, wobei das Verfahren Folgendes umfasst:

a) Erfassen eines Bedarfs zur Verbesserung der Systemstabilität in dem Stromversorgungssystem;
b) Modulieren einer Kombination von Wirkleistung und Blindleistung, wobei die Wirkleistung und die Blindleistung von der Stromerzeugungsanlage durch Trennen und Verbinden einiger oder aller Solarpanels bereitgestellt werden, um eine Wirkleistungsmodulation durchzuführen und durch Verwendung einer Wechselrichterkapazität der Stromerzeugungsanlage Blindleistung mit dem Stromversorgungssystem auszutauschen; und
c) Bereitstellen der Kombination aus der modulierten Wirkleistung und der modulierten Blindleistung von der Stromerzeugungsanlage zu dem Stromversorgungssystem;
wobei

- eine Modulation der Kombination von Wirk- und Blindleistung in einer entkoppelten Art und Weise gleichzeitig durchgeführt wird,
- Schritt b) ferner das Betreiben mindestens eines Inverters der Stromerzeugungsanlage umfasst, um mindestens einen Teil der Kapazität des mindestens einen Wechselrichters zu verwenden, um die Kombination der modulierten Wirkleistung und der modulierten Blindleistung bereitzustellen, und
- die Kombination der modulierten Wirkleistung und der modulierten Blindleistung aus Schritt b) die Stabilität des Stromversorgungssystems erhöht, indem mindestens eine der folgenden Maßnahmen ausgeführt wird:

- Dämpfung von Systemschwankungen;
- Erhöhung der transienten Stabilität;
- Regelung der Netzfrequenz;
- Verbesserung der Spannungsstabilität;
- Erhöhung der Energieübertragungskapazität in Übertragungsleitungen; und
- Erhöhung der Energieübertragungskapazität in Verteilungsleitungen.

2. Verfahren gemäß Anspruch 1, wobei Schritt b) das Betreiben mindestens eines Solarpanels mit weniger als einer maximalen Kapazität umfasst.

3. Verfahren gemäß Anspruch 1, wobei Schritt b) durch Variieren der Wirkleistungserzeugung der Stromerzeugungsanlage innerhalb eines verfügbaren Bereichs von Solarenergie für die photovoltaikbasierte Solarfarm erreicht wird.

4. Verfahren gemäß Anspruch 1, wobei die Stromerzeugungsanlage so betrieben wird, dass jegliche verbleibende Wechselrichterkapazität in der Stromerzeugungsanlage nach der Wirkleistungserzeugung für den Blindleistungsaustausch verwendet wird.

5. Verfahren gemäß Anspruch 1, wobei eine Übertragungskapazität für das Stromversorgungssystem erhöht wird durch Bereitstellung von mindestens entweder modulierter Blindleistung, modulierter Wirkleistung oder einer Kombination der modulierten Blindleistung mit der modulierten Wirkleistung an das Stromübertragungssystem und ein Stromverteilsystem, wobei mindestens die modulierte Blindleistung, die modulierte Wirkleistung oder die Kombination der modulierten Blindleistung und der modulierten Wirkleistung durch die Stromerzeugungsanlage bereitgestellt wird.

6. Verfahren gemäß Anspruch 1, wobei Schritt a) das autonome Erfassen eines Bedarfs zur Verbesserung der Systemstabilität in dem Stromversorgungssystem beinhaltet.

7. Verfahren gemäß Anspruch 1, wobei Schritt a) das Erfassen eines Bedarfs zur Verbesserung der Systemstabilität in dem Stromversorgungssystem basierend auf der Kommunikation durch einen Stromnetzbetreiber beinhaltet.

8. Verfahren gemäß Anspruch 1, wobei die Stromerzeugungsanlage mindestens entweder die modulierte Blindleistung, die modulierte Wirkleistung oder die Kombination der modulierten Wirkleistung und der modulierten Blindleistung an das Stromversorgungssystem bereitstellt für einen Zeitraum, in dem ein Bedarf an erhöhter Systemstabilität von dem Stromversorgungssystem wahrgenommen wird.

## Revendications

1. Procédé pour améliorer la stabilité d'un système d'alimentation électrique auquel est couplée une installation de production d'énergie, dans lequel ladite installation de production d'énergie est une ferme solaire photovoltaïque comprenant des panneaux solaires, le procédé comprenant de :

a) détecter un besoin d'amélioration de la stabilité du système dans ledit système d'alimentation électrique ;
b) moduler une combinaison de puissance réelle et réactive, ladite puissance réelle et ladite puissance réactive étant fournies par ladite installation de production d'énergie en déconnectant et en connectant certains ou tous lesdits panneaux solaires pour effectuer une modulation de puissance réelle et en utilisant la capacité de l'onduleur de ladite installation de production d'énergie pour échanger de la puissance réactive avec ledit système d'alimentation électrique ; et
c) fournir ladite combinaison de ladite puissance réelle modulée et de ladite puissance réactive modulée de ladite installation de génération de puissance audit système de puissance ;
dans lequel

- une modulation de ladite combinaison de puissance réelle et réactive est effectuée simultanément de manière découplée,
- l'étape b) comprend en outre le fonctionnement d'au moins un onduleur de ladite installation de production d'énergie pour utiliser au moins une partie de la capacité dudit au moins un onduleur pour fournir ladite combinaison de ladite puissance réelle modulée et de ladite puissance réactive modulée, et
- ladite combinaison de ladite puissance réelle modulée et de ladite puissance réactive modulée de l'étape b) augmente ladite stabilité dudit système de puissance en réalisant au moins un de :

  - l'amortissement des oscillations du système ;
  - l'augmentation de la stabilité transitoire ;
  - la régulation de la fréquence du système d'alimentation électrique ;
  - l'amélioration de la stabilité de la tension ;
  - l'augmentation de la capacité de transmission d'électricité dans les lignes de transmission ; et
  - l'augmentation de la capacité de transmission d'électricité dans les lignes de distribution.

2. Procédé selon la revendication 1, dans lequel l'étape b) comprend le fonctionnement d'au moins un panneau solaire à moins d'une capacité maximale.

3. Procédé selon la revendication 1, dans lequel l'étape b) est accomplie en faisant varier la production d'énergie réelle de ladite installation de production d'énergie dans une plage d'énergie solaire disponible pour ladite ferme solaire photovoltaïque.

4. Procédé selon la revendication 1, dans lequel ladite installation de production d'énergie est exploitée de sorte que toute capacité d'onduleur restante dans ladite installation de production d'énergie après la production d'énergie réelle soit utilisée pour l'échange d'énergie réactive.

5. Procédé selon la revendication 1, dans lequel une capacité de transmission est augmentée pour ledit système d'alimentation électrique en fournissant au moins une parmi une puissance réactive modulée, une puissance réelle modulée et une combinaison de ladite puissance réactive modulée et de ladite puissance réelle modulée audit système de transmission d'électricité et un système de distribution d'électricité, ladite au moins une parmi ladite puissance réactive modulée, ladite puissance réelle modulée et ladite combinaison de ladite puissance réactive modulée et de ladite puissance réelle modulée étant fournie par ladite installation de production d'énergie.

6. Procédé selon la revendication 1, dans lequel l'étape a) consiste à détecter de manière autonome un besoin d'amélioration de la stabilité du système dans le système d'alimentation électrique.

7. Procédé selon la revendication 1, dans lequel l'étape a) consiste à détecter un besoin d'amélioration de la stabilité du système dans ledit système d'alimentation électrique sur la base d'une communication par un opérateur du système d'alimentation électrique.

8. Procédé selon la revendication 1, dans lequel ladite installation de production d'énergie fournit au moins un parmi : ladite puissance réactive modulée, ladite puissance réelle modulée, et ladite combinaison de ladite puissance réelle modulée et de ladite puissance réactive modulée audit système d'alimentation électrique pendant une durée de temps pendant laquelle un besoin d'amélioration de la stabilité du système est ressenti par le système d'alimentation électrique.

FIGURE 1

FIGURE 2

FIGURE 3

FIGURE 4

FIGURE 5

**FIGURE 6**

**FIGURE 7**

EP 3 005 515 B2

FIGURE 8

FIGURE 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011032265 A1

**Non-patent literature cited in the description**

- Modeling Guidelines and a Benchmark for Power System Simulation Studies of Three-Phase Single-Stage Photovoltaic System. *IEEE Transactions on Power Delivery,* April 2011, vol. 26 (2), 1247-1264

- **N.G. HINGORANI ; L. GYUGYI.** Understanding FACTS. IEEE Press, 1999
- **PRABHA KUNDUR.** Power System Stability and Control. McGraw Hill, 1994, 589
- **PRABHA KUNDUR.** Power System Stability and Control. McGraw Hill, 1994, 617